# EUROPEAN PATENT APPLICATION

(11) **EP 2 613 241 A2**
(43) Date of publication of application: **10.07.2013**
(21) Application number: 13150162.9
(22) Date of filing: 03.01.2013
(51) Int. Cl.: G06F 3/0484, G06F 3/0482, G06F 17/30

(54) **Searching method for a plurality of items and terminal supporting the same**

(30) Priority: 06.01.2012 KR 20120001830
(71) Applicant: Samsung Electronics Co., Ltd, Gyeonggi-do 443-742 (KR)
(72) Inventor: Han, Sangjin, 443-742 Gyeonggi-do (KR); Lee, Jonghyuk, 443-742 Gyeonggi-do (KR); Lee, Jubong, 443-742 Gyeonggi-do (KR)
(74) Representative: Nederlandsch Octrooibureau

(57) **Abstract**

A terminal for searching a plurality of items includes: a communication unit for receiving a plurality of items configured in at least one of a list type and a grid type from a memory or an outside; an input unit or a display unit of a touch function for generating a separate display request of at least one selected from the plurality of items; and a controller controlling such that the at least one selected item is separately displayed on a selection item display region.

## Description

### BACKGROUND OF THE INVENTION

### Field of the Invention

The present invention relates to searching a plurality of items, and more particularly, to a searching method that allows a user to review an on-going search activity on a plurality of items, and that allows a user to easily perform an additional search based on the search activity, and a terminal supporting the same.

### Description of the Related Art

A portable terminal supports various user functions through a display unit, wherein a user uses a specific user function to navigate contents items.

With the development of semiconductor integration technology and data processing technology, the portable terminal is becoming smaller and able to store and process large amount of data, such as music, photos and other multimedia contents. The portable terminal provides a list which allows a user to easily browse a plurality of content items.

However, since the size of a screen is desired to be small to be portable, there is a limit in a number of items capable of being displayed on the screen. To overcome this, a scroll function is provided to show items not displayed on a display unit. Still, it is difficult to search and select desired items using this function as the size of a display unit is limited. Particularly, when items which the user wishes to search are spaced apart from a scrolling list by a predetermined distance, the user must memorize the selected items as scrolling down the list to search and select only desired items. When the user can not memorize the selected items during operation, there is inconvenience in that the user must repeat the scroll function to confirm the previous searches again.

### SUMMARY OF THE INVENTION

The present invention has been made in view of the above problems and overcomes the previous problems, by providing a searching support method for a plurality of items and a terminal supporting the same which enables a portable terminal user to easily confirm a selection of at least one selected item by the user in a state when a plurality of items are outputted, thereby easily performing additional item search.

In accordance with an aspect of the present invention, a searching method for a plurality of items includes: displaying at least a portion of a plurality of items, for example in at least one of a list type and a grid type; and separately displaying the at least one selected item on a selection item display region according to a request to show the at least one selected item.

In accordance with another aspect of the present invention, a terminal for searching a plurality of items includes: a display for displaying a plurality of items, for example in at least one of a list type and a grid type; and a controller controlling the at least one selected item to be separately displayed on a selection item display region in response to a request.

In accordance with an aspect of the invention, a method is provided for searching a plurality of items on a display screen, the method comprising: displaying the plurality of items on the screen; and separately displaying at least one selected item on a selection item display region in response to a request for displaying the at least one item selected from the plurality of items.

Herein, separately displaying the at least one selected item may comprise one of: outputting the at least one selected item on the selection item display region; and allocating a predetermined region on the screen on which the plurality of items are displayed.

The method may further comprise outputting at least one of items which are not selected from the plurality of items on an additional item display region.

The method may further comprise outputting a total number of the selected items.

The outputting the at least one of items may comprise at least one of: outputting items except for the selected items among the plurality of output items; outputting items arranged adjacent to the selected items; and outputting items that are not displayed.

The method may further comprise at least one of: moving a newly selected item to the selection item display region when the newly selected item is from the additional item display region; and moving an item in which selection is unselected to the additional item display region.

The method may further comprise one of: removing a previously displayed item from a corresponding region to display a newly added item and outputting a scroller at one end of the selection item display region; adjusting a size of the selection item display region to display a newly added item; and extending the selection item display region to display a newly added item.

The selection item display region may update and output a total number of the selected items according to the addition or cancellation of the item.

The method may further comprise: removing the additional item display region; and extending the selection item display region according to the removal of the additional item display region.

The may further comprise arranging a check box adjacent to each item for selecting at least one item among the plurality of items or for cancelling the selection of the at least one item.

According to an aspect of the invention, a terminal is provided for searching a plurality of items, the terminal comprising:
a display unit for displaying a plurality of items in response to receiving a request for displaying at least one item selected from the plurality of items; and
a controller for separately displaying the at least one selected item displayed on a selection item display region according to the display request.

The display unit may provide a page including the at least one selected item; and a predetermined region on the display unit on which the plurality of items are displayed.

The display unit may be configured to display an additional item display region outputting at least one of items which are not selected from the plurality of items.

The display unit may be configured to display a total number of the selected items.

The additional item display region may be configured to output at least one of: items except for the selected items among the plurality of output items; items arranged adjacent to the selected items; and items which are not displayed.

The controller may be configured to move a newly selected item from the additional item display region to the selection item display region; and move an item in which selection is unselected from the selection item display region to the additional item display region.

The display unit may be configured to output one of: a scroller at one end of the selection item display region; a resized selection item display region to accommodate a newly added item; and an extended selection item display region to display the newly added item.

The selection item display item may be configured to update a total number of the selected items according to the addition or selection cancellation of the item.

The controller may be configured to remove the additional item display region according to a user request; and extend and display the selection item display region according to the removal of the additional item display region.

The display unit may further comprise a check box region arranged adjacent to each item for selecting at least one item among the plurality of items or for cancelling the selection of the at least one item.

According to an aspect of the invention, a terminal is provided for searching a plurality of items, comprising:
a display unit for displaying a plurality of items in response to receive a request for displaying at least one item selected from the plurality of items; and
a controller for separately displaying the at least one selected item displayed on a selection item display region according to the display request,
wherein the display unit displays a total number of the selected items.

### BRIEF DESCRIPTION OF THE DRAWINGS

The above features and advantages of the present invention will be more apparent from the following detailed description in conjunction with the accompanying drawings, in which:
FIG. 1 is a diagram illustrating a search process of a plurality of items according to a first embodiment of the present invention;
FIG. 2 is a diagram illustrating a search process of a plurality of items according to a second embodiment of the present invention;
FIG. 3 is a diagram illustrating a search process of a plurality of items according to a third embodiment of the present invention;
FIG. 4 is a diagram illustrating a search process of a plurality of items according to a fourth embodiment of the present invention;
FIG. 5 is a diagram illustrating a search process of a plurality of items according to a fifth embodiment of the present invention;
FIG. 6 is a block diagram schematically illustrating a configuration of a terminal according to an exemplary embodiment of the present invention;
FIG. 7 is a block diagram illustrating a configuration of a controller shown in FIG. 6 in detail; and
FIG. 8 is a flowchart illustrating a searching support method of a plurality of items according to an exemplary embodiment of the present invention.

### DETAILED DESCRIPTION OF EXEMPLARY EMBODIMENTS

Exemplary embodiments of the present invention are described with reference to the accompanying drawings in detail. The same reference numbers are used throughout the drawings to refer to the same or like parts. For the purposes of clarity and simplicity, detailed descriptions of well-known functions and structures incorporated herein may be omitted to avoid obscuring the subject matter of the present invention.

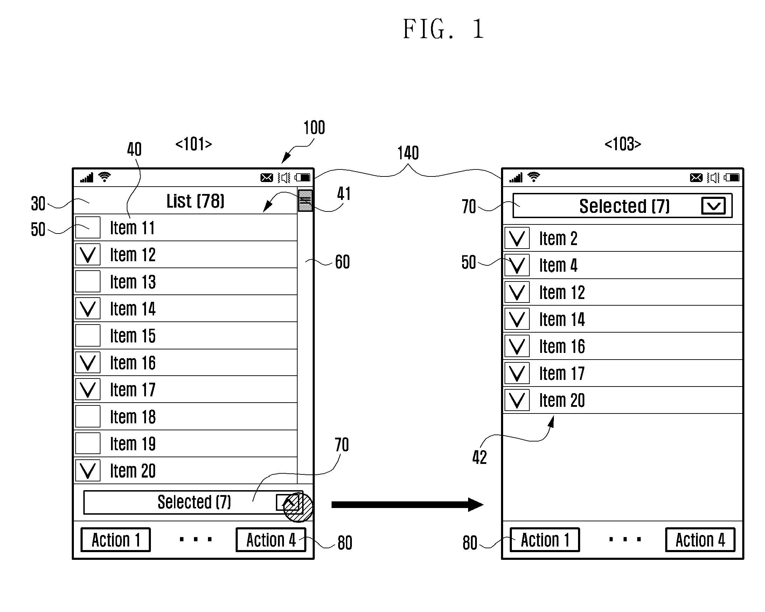

FIG. 1 is a diagram illustrating a function for searching a plurality of items according to a first embodiment of the present invention.

A user may activate a specific user function in which a display of a plurality of items 40 is requested during an operation of the terminal 100. A number of user functions may include, for example, a phone-book function, an image or a text, or audio file search and playback function, and a function accessing a web server or another terminal that provides a page of the plurality of items 40. To support these functions, the terminal 100 may provide menu items associated with corresponding functions.

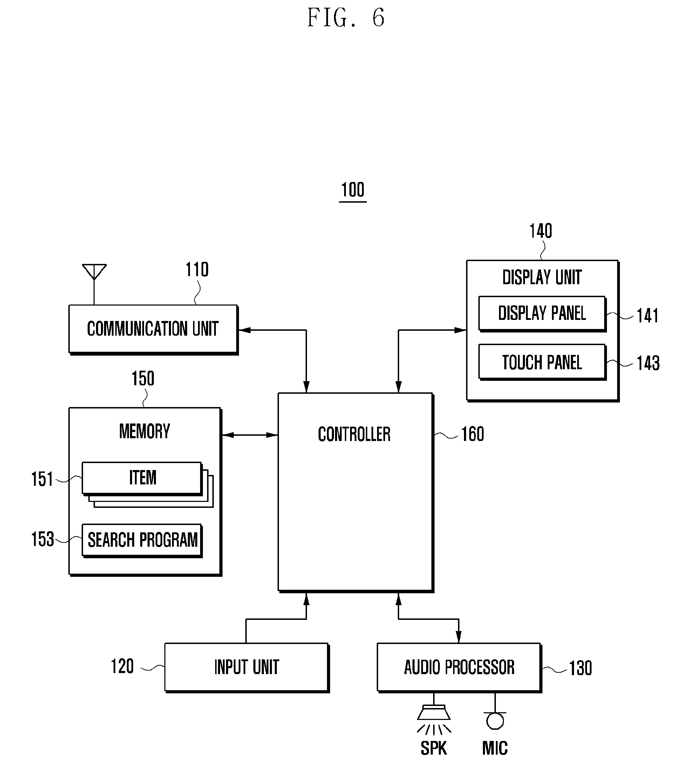

Referring to FIGs 1 and 6, when the user activates a specific user function during a display of the plurality of items 40 is shown, a display unit 140 may provide a screen interface as illustrated in a screen 100. That is, the display unit 140 may output a list region 30 and an item display region 41. The display unit 140 may arrange a scroller 60 capable of scrolling the page one end, for example, a right edge region of a screen to support a search of other items which are not outputted on a current screen among a plurality of items 40. Hence, the user may operate the scroller 60 to move a plurality of items 40 outputted on an item display region 41. Accordingly, the display unit 140 may remove at least one current displayed item and output a new item during scrolling.

The display unit 140 outputs a plurality of items 40 on the item display region 41 in a predetermined order. The display unit 140 may output a check box 50 in the item display region 41 or at one side of a screen in an adjacent region of an output region of a corresponding item for selecting a specific item among a plurality of items 40. The user may select a desired item by selecting a specific check box 50. For example, as shown, the user may select a check box 50 to select an item 2, an item 4, an item 12, an item 14, an item 16, an item 17, and an item 20, respectively. At this time, the user may search and select other items which are not displayed on one screen by scrolling the page using a scroller 60. Accordingly, an item 2 and an item 4 selected by the user may not be displayed on a current screen in a state when an item 11 to an item 20 are outputted on the display unit 140.

Meanwhile, the display unit 140 according to the present invention may output a selection item display item 70 at a bottom end of the item display region 41. Note that the contents of the selection item display item 70 may be automatically updated according to selection of an item. That is, the selection item display item 70 may update and display the total number of selected items during operation. Thus, when the user adds or cancels item selection, a number or an image displaying the number is adjusted accordingly. The user may confirm how many items are selected from a total list in real time. A screen 101 shows an inactivated state of the selection item display item 70 as a step before activating a selection item display function.

Further, the display unit 140 according to the present invention outputs a function selection region 80 supporting specific function activation at one side of a screen based on items disposed on an item display region 41. A screen 100 shows that the function selection region 80 is arranged below the selection item display item 70. The user may select and operate a specific function displayed on the function selection region 80, for example, playback, deletion, sharing, setting change, common tag information writing, and integral transmission of selected items. Thus, the function selection region 80 may provide items corresponding various functions or a list for selection.

If the selection item display item 70 is activated on the screen 101, the display unit 140 may configure a selection item display screen configured by selection items and output the selection item display screen as illustrated in a screen 103. The selection item display screen is a screen provided by integrating items selected from the list by the user. In the selection item display screen, the selection item display item 70 is arranged, for example, on a top end of the screen, and the selected items may be outputted to a selection item display region 42. To return to a previous screen, the user may perform an operation which converts the selection item display item 70 from an active state to an inactive state.

A check box 50 for canceling selection may be outputted on the selection item display region 42. The user may confirm selection items selected through the selection item display region 42 by the user in detail, and particularly, confirm types of selection items which are not currently outputted on the display unit 140 due to scroll. To cancel selection of one from the selection items, the user may cancel selection of a specific selection item by selecting a check box 50 of the selection item display region. The function section region 80 is maintained on the screen 103, so that selection and activation of a specific function may be supported on the selection item display screen. In addition, although not shown, when selection items may not be displayed on a predetermined region of the selection item display region 42 in a single screen, a scroller may further be arranged to perform scrolling.

As described above, the display unit 140 supporting a plurality of item search functions according to an embodiment of the present invention provides means for the user to separately review and confirm at least one selection item selected by the user, and also supports such that selection cancellation of the selection items and the related function execution of the selection items may be directly executed on a selection item display screen. Accordingly, the user may rapidly review and select desired items among many items. The user may reduce error of selecting items as the types of selected items may be reviewed before the execution of functions related to the selected items, thus reducing a frequency of repeating process for selecting items after execution of the function.

Meanwhile, the foregoing embodiment has illustrated that screen conversion is performed to separately display a selection item by way of example, but the present invention is not limited thereto. That is, the display unit 140 of the present invention may output a selection item display region through a division of a screen or allocation of a predetermined region in a screen 100 without performing screen conversion to separately display a selection item.

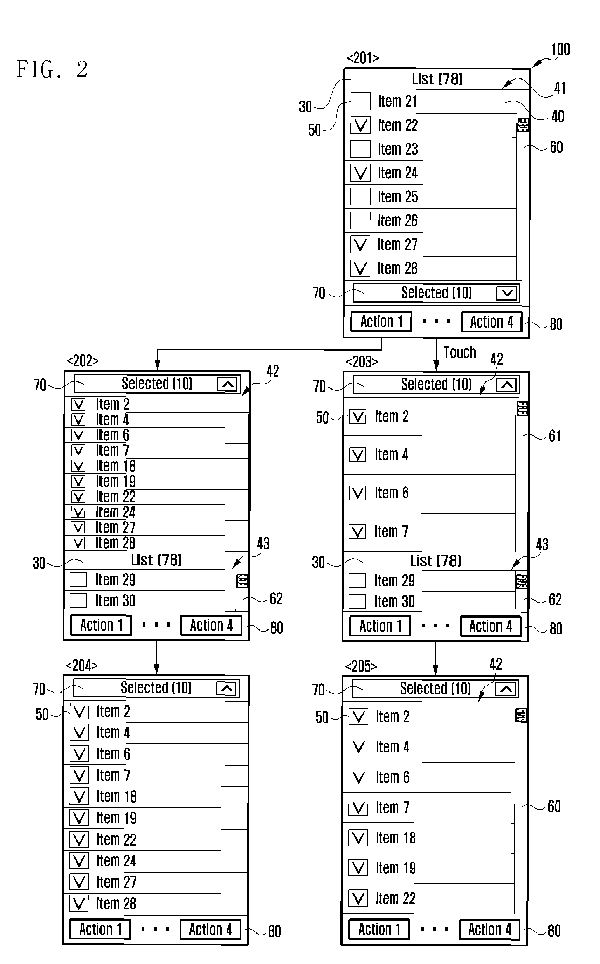

FIG. 2 illustrates an example of an exemplary diagram of a screen which supports a plurality of item search functions according to a second embodiment of the present invention.

Referring to FIG. 2, the display unit 140 may output a screen interface configured by a list region 30 indicating characteristics of a current display screen, an item display region 41 outputting a plurality of items 40, a check box 50 supporting specific item selection setting, a scroller 60 for scrolling a page outputted on the item display region 41, a selection item display item 70 outputting a region capable of viewing at least one selection item or supporting conversion to a viewable screen, and a function selection region 80 supporting such that a specific user function provided from the terminal 100 may be performed based on a selected item.

The list region 30 is a configuration which outputs information associated with a user function requiring output of a plurality of items 40 selected by the user. The list region 30 may be outputted together with the total number information of the items 40 associated with a corresponding user function. Alternatively, the number information may be displayed as a number according to a designer preference or a setting adjustment of the user, and may also be changed to a specific image or icon.

The item display region 41, the scroller 60, the selection item display item, and the function selection region 80 have the same configuration as that of those shown in FIG. 1, and thus a detailed description thereof is omitted. However, a current item display region 41 output on the display unit 140 indicates a situation in which different types of items among a plurality of items are outputted by operating the scroller 60 by the user. For example, the item display region 41 indicates a state that an item 21 to an item 28 is outputted. It is assumed that the display unit 140 may display eight items for illustrative purposes. The number of output items may be changed according to the size of an item in which the size of the display unit 140 is outputted. Meanwhile, the user may change setting the check box 50 to select an item 22, an item 24, an item 27, and an item 28 among the item 21 to the item 28. It is assumed that the user has selected items 2, 4, 6, and 7 among previous items in a description of a plurality of item search functions according to the second embodiment of the present invention. It is assumed that the user selects total 10 items including the foregoing items among the item 1 to the item 28. Accordingly, the display unit 140 may output "10" corresponding to the number of selected items on a selection item display item 70 in a screen 101.

Meanwhile, when the user activates the selection item display item 70 during an inactive state, the terminal 100 displays items selected by the user as illustrated in screens 202 and/or 203. Particularly, as shown, the display unit 140 may be divided into two regions 42 and 43.

A region disposed on a top of the screen 203 may include a selection item display region 42 and a first scroller 61. The selection item display region 42 may be allocated to a size capable of displaying total 4 items. Accordingly, the first scroller 61 supporting page scrolling may be disposed at a right side of the selection item display region 42 such that a user may read all of selected items by scrolling down. A selection item display item 70 instructing an active state may be outputted at a top of the selection item display region 42. Here, the user may return to the screen 201 by adjusting a selection item display item 70 in an active state or return to the screen 201 through a return key button to a previous screen provided from the terminal 100.

Meanwhile, in the foregoing assumption, items such as the items 2, 4, 6, and 7 previously selected by the user may be outputted on a selection item display region 42 of a screen 203. When the user performs scrolling of a corresponding region using the first scroller 61, the items 18, 19, 22, 24, 27, and 28 selected from the screen 201 may be previewed.

Meanwhile, four items is outputted on a selection item display region 42 of the screen 203, but the present invention is not limited thereto. The display unit 140 may output more number of selected items, for example, 10 items on a selection item display region 42 as illustrated in a screen 202 by resizing the size of items outputted in the selection item display region 42.

The display unit 140 of the present invention may output an additional item display region 43 so that an additional item is continuously searched from a region separated from the selection item display region 42 as illustrated at the bottom of screens 202 and 203. The additional item display region 43 may output items after items output on the screen 201. That is, if the user activates the selection item display item 70 in a state that the items 21 to 28 are outputted on the screen 201, items after an item 29 may be displayed on the additional item display region 43. The screens 202 and 203 indicate a state that two items are outputted on the additional item display region 43, but the number of outputs may be controlled according to user setting or intention of a designer. A second scroller 62 may be arranged at a region adjacent to the additional item display region 45 to search an additional item.

Meanwhile, when an additional item display region 43 is outputted according to activation of the selection item display item 70 in a state of the screen 201, the items may be output on the additional item display region 43 following a final item selected by the user. For example, when the user generates an input signal for activating the selection item display item 70 in a state that a finally selected item is the item 24 in the screen 201, an item 25 may be outputted to an uppermost end of the additional item display region 43 and items 26 and 27 may be sequentially displayed below the uppermost end of the additional item display region 43.

A list region 30 may be outputted to a top end of the additional item display region 43. Here, information about the number of entire items included in a corresponding list may be outputted to the list region 30, and information defining characteristics of the corresponding list, for example, information defining file characteristics such as audios, images, and texts, and information associated with an album name or other entire items may be outputted.

A function selection region 80 may be outputted to the additional item display region 43. The function selection region 80 supports the same function as that of the function selection region 80 in the screen 201. When a specific function is selected, the function selection region 80 supports such that selection items included in the selection item display region 42 are operated according to the selected function.

Meanwhile, the additional item display region 43 may be removed from the display unit 140 according to a user request as shown in screen 204 and 205. That is, if a preset input signal or a specific gesture event based on a touch screen is generated, the additional item display region 43 may be removed from the display unit 140. If the additional item display region 43 is removed, the selection item display region 42 automatically extends to the removed additional item display region 43 to display selection items. When only a part of the total number of selection items is outputted on the selection item display region, the display unit 140 may output other selection items to the extended region. In a state that 4 of 10 selection items are outputted, if the additional item display region 43 is removed, as illustrated in a screen 205, total 7 selection items may be outputted. When entire selection items are resized and the resized items are outputted on the selection item display region 42 as illustrated in a screen 202, the display unit 140 increases the size of the selection item display region 42 to the extended region according to removal of the additional item display region 43 to display entire selection items as illustrated in a screen 204.

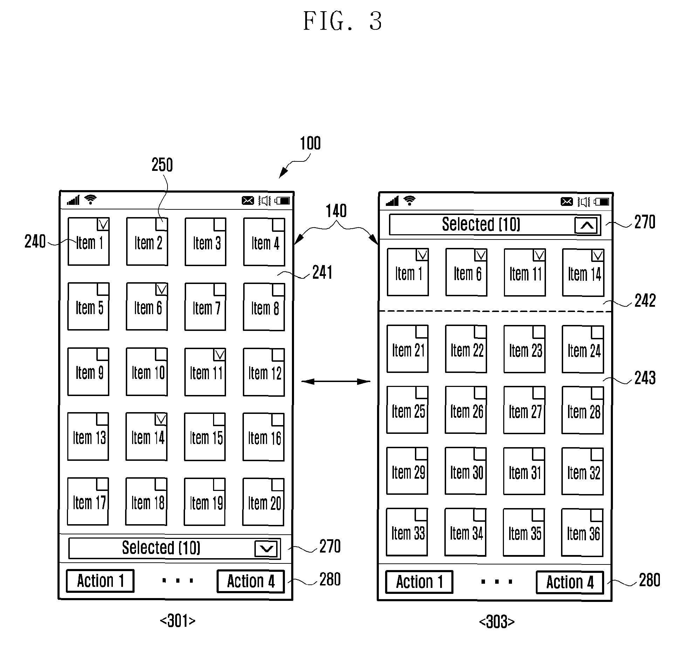

FIG. 3 is a diagram illustrating a search function of a plurality of items according to a third embodiment of the present invention.

Referring to FIG. 3, if a user function requiring a display of a plurality of items is activated, the display unit 140 may arrange and display a plurality of items 240, for example, an item 1 to an item 20 on a screen in a grid type manner, as illustrated in a screen 301. The items 240 may be one of various types such as an image file, a text file, a widget, a sticker, and an icon. The display unit 140 may provide a grid type item display region 241, a grid type function selection region 280, and a grid type selection item display item 270 to display a plurality of items 240.

If the items 240 are outputted on the display unit 140, the user may select an item which the user desires. To this end, the display unit 140 may output a grid type item display region 241 which includes a region adjacent to a region displaying items 240 having a check box 250 capable of individually selecting respective items and an inner region of a region displaying the items 240. The user may select specific items from a plurality of items 240 by controlling setting a corresponding check box 250.

The grid type function selection region 280 is a region which provides at least one function item such that a specific function may be performed on the selected items. For example, the grid type function selection region 280 may include items corresponding to the forgoing function items such as entire removal, sharing, transmission, tag information writing of selected items.

The grid type selection item display item 270 may be outputted to a predetermine region adjacent to the grid type item display region 241. The grid type selection item display item 270 supports a function of combining only items selected by the user and displaying the combined items on a predetermined region is activated or inactivated. Accordingly, if an input signal for activating the grid type selection item display item 270 is generated, the display unit 140 may output a screen such as a screen 303. That is, the display unit 140 may output only items, for example, items 1, 6, 11, and 14 selected by the user on the grid type selection item display region 242 in a screen 301. The grid type selection item display item 270 supporting returning to a previous screen (indicated as an arrow box) and providing information about selected items may be disposed at a region adjacent to the grid type selection item display region 242, for example, at a top of the grid type selection item display region 242.

Meanwhile, the display unit 140 may provide a first grid type display region 243 so that an item search operation may be continuously supported as illustrated in a screen 303. Items outputted on the first grid type additional item display region 243 may be items which are not displayed except for a plurality of items including the selection item. For example, the items outputted on the first grid type additional item display region 243 may be items after items outputted on a screen 301. It is assumed that there are 1 to 50 items associated with a currently activated user function, and 20 items may be displayed on one screen of the display unit 140. Then, items from an item 21 to an item 36 after an item 20 outputted on a screen 301 may be outputted on the first grid type additional item display region 243. Items except for the number of selected items outputted on the grid type selection item display region 242 may be outputted on the first grid type additional item display region 243.

The number of items displayed on the grid type selection item display region 242 may be fixed or adjusted. For example, when five items are selected from the screen 301, a grid type selection item display region 242 may be controlled so that five selection items may be displayed. That is, the size of the grid type selection item display region 242 is enlarged to include a part of the first grid type additional item display region 243. In this case, a boundary line displaying a grid type selection item display region 242 may be changed to accommodate the partial region. Thus, the size of items outputted in the grid type selection item display region 242 may be resized and five selected items may be outputted to a fixed region. Alternatively, the grid type selection item display region 242 maintains a state 303 of displaying 4 selected items, and a scroller for searching a fifth selection item may be outputted to a region adjacent to a corresponding region or the corresponding region.

When the size of the grid type selection item display region 242 is changed, a first grid type additional item display region 243 may also be adjusted according thereto. Accordingly, the number of items to be outputted on the first grid type additional item display region 243 may be adjusted. For example, when the grid type selection item display region 242 is controlled to a region on which five selection items are output through boundary line control without internal resizing, the first grid type additional item display region 243 may be adjusted to a region in which one item display region is reduced as comparison with a previous time.

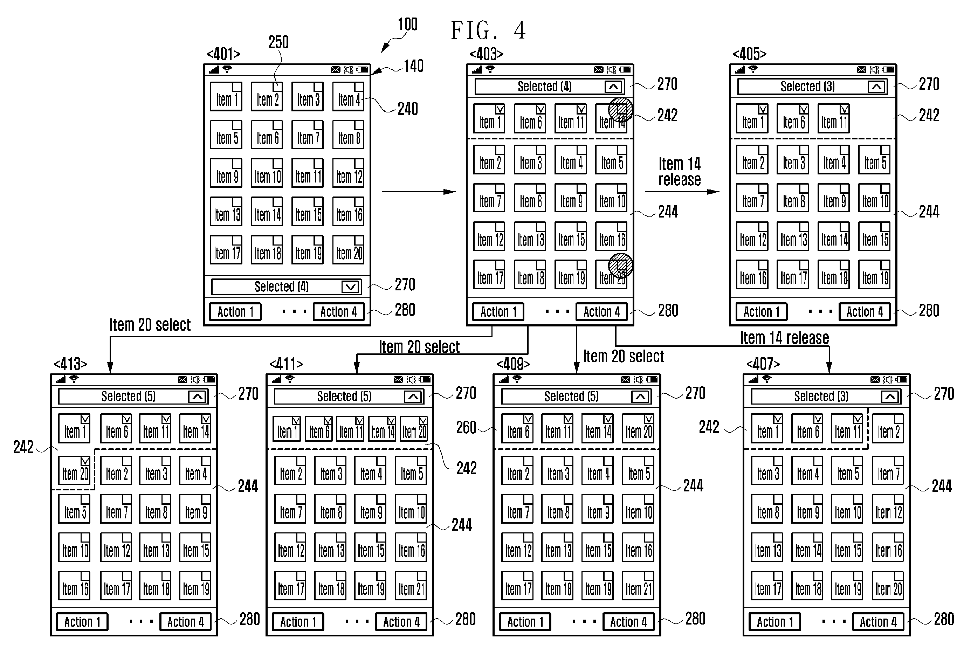

FIG. 4 is a diagram illustrating a search function support of a plurality of items according to a fourth embodiment of the present invention.

Referring to FIG. 4, a plurality of items 240 may be outputted on a display unit 140 in a grid type according to selection of a user function as illustrated in a screen 401. A screen 401 is substantially the same as the screen 301 mentioned above, and thus a detailed description thereof is omitted.

Meanwhile, when an input signal for activating a grid type selection item display item 270 is generated in a screen 401, the display unit 140 may output a grid type selection item display item 270, a grid type selection item display region 242, a second grid type additional item display region 244 as illustrated in a screen 403. Particularly, a second grid type additional item display region 244 of search function support of a plurality of items according to the fourth embodiment of the present invention may be a region of outputting items which are not selected from the screen 401. Accordingly, the user may easily discriminate and review an item selected by the user and an item which is not selected by confirming a grid type selection item display region 242 and a second grid type additional item display region 244 of a screen 403.

For example, items 1, 6, 11, and 14 are selected from a screen 401 and then the grid type selection item display item 270 is activated, the user may output the items 1, 6, 11, and 14 on the grid type selection item display region 242 as illustrated in a screen 403. Items, that is, items 2 to 5, items 7 to 10, items 12 and 13, items 15 to 20 may be outputted on the second grid type addition item display region 244. Items outputted on the grid type selection item display region 242 may have a state that a check box 250 is checked. The user may cancel the corresponding a check state to an item in a state that a check 250 by deselecting the item. In this case, an item outputted on the grid type selection item display region 242 may be automatically moved to the second grid type additional item display region 244.

For example, a check state of an item 14 is released, only items 1, 6, and 11 may be outputted on the grid type selection item display region 242. An item 14 may be automatically arranged between items 13 and 15 on the second grid type additional item display region 244. In this case, when the grid type selection item display region 242 is designed to be fixed, a specific item, for example, an item 20 may be pulled and removed from the screen in the second grid type additional item display region 244 due to addition of the item 14 as illustrated in a screen 405. When the grid type selection item display region 242 is a boundary line flow type, a boundary line is controlled to instruct items 1, 6, and 11 as illustrated in a screen 407, so that the item 14 is arranged between items 13 and 15. Accordingly, location of adjacent items may be changed.

When a user selects a specific item of a second grid type additional item display region 243 from a screen, for example, when the user selects an item 20, a corresponding item 20 may be included in a grid type selection item display region 242. In this case, when the grid type selection item display region 242 is fixed, the display unit 140 displays an added item 20 on a corresponding region as illustrated in a screen 409, removes a specific item, for example, an item 1 from a corresponding region due to addition of the item 20, and generates a scroller 260 to instruct that the item 1 is included. The display unit 140 may resize the sizes of the items 1, 6, 11, 14, and 20 so that entire selection items including the item 20 is displayed on a fixed grid type selection item display region 242 as illustrated in a screen 411. In a case of boundary line application where a region size is a flow type, the display unit 140 may control a boundary line defining a grid type selection item display region 242 and a grid type additional item display region 244 as illustrated in a screen 413.

Meanwhile, in the foregoing description, when an item is selected from an additional item display region, or selection of the item is released from the selected item display region, information of the selection item display item 270 may be upgraded according to selection and release of the item. Display according to selection of the item and release thereof may be equally supported to a search function support screen of a plurality of items according to a third embodiment of the present invention and a search function support screen of a plurality of items according to a fifth embodiment of the present invention.

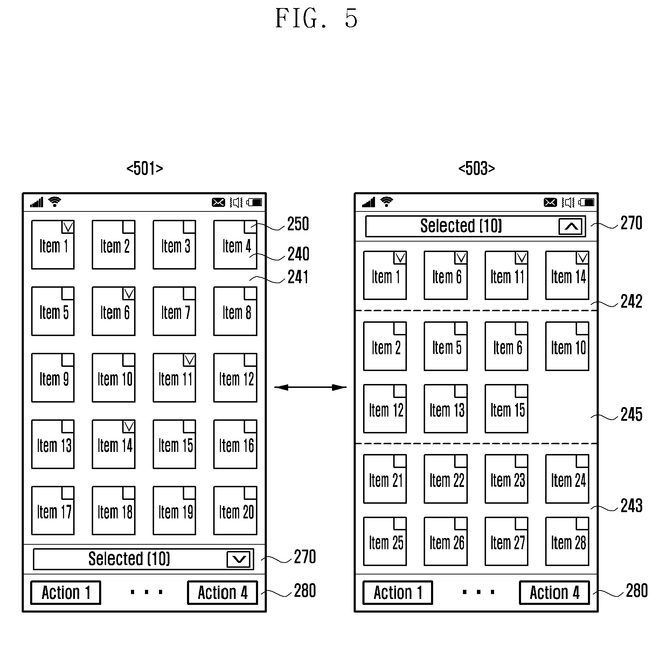

FIG. 5 is an exemplary diagram of a screen illustrating a search function of a plurality of items according to a fifth embodiment of the present invention.

Referring to FIG. 5, as illustrated in a screen 501, a plurality of items 240 may be output on the display unit 140 in a grid type manner. To avoid redundancy, the screen 501 may be the same as the screen 301 and the screen 401, and thus a detailed description thereof is omitted.

Meanwhile, when an input signal for activating a grid type selection item display item 270 is generated in the screen 501, the display unit 140 may output a grid type selection item display item 270, a grid type selection item display region 242, a first grid type additional item display region 243, and a third grid type additional item display region 245 as illustrated in a screen 503. A first grid type additional item display region 243 and a third grid type additional item display region 245 may be regions of outputting items which are not selected from the screen 501 according to the fifth embodiment of the present invention. Accordingly, the user may easily separately confirm items selected by the user and items which are not selected by confirming a grid type selection item display region 242, a first grid type additional item display region 243, and a third grid type additional item display region 245 of a screen 503. The present invention may easily search other items in a confirmed state of selected items and display user-friendly items.

The third grid type additional item display region 245 is a region of displaying items adjacent to items selected from a screen 501 by the user. That is, when the user selects items 1, 6, 11, and 14, items 2, 5, 7, 10, 12, 13, and 15 adjacent to respective items may be outputted to a third grid type additional item display region 245. Accordingly, the output number of the third grid type additional item display region 245 may be changed according to the number of items selected by the user. In general, when one is selected from two or three continuously arranged items during selection of items to additionally select the item, a case where confirmation of an item adjacent to the selected item is required may be easily generated. Accordingly, the display unit 140 of the present invention may more easily confirm a selected item through a third grid type additional item display region 245 and items arranged at an adjacent region, and additionally select the items. In the foregoing description, the third grid type additional item display region 245 is defined as a region displaying items adjacent to both sides based on a selected item, but such a characteristic may be controlled according to intention of a designer or setting of the user. For example, the third grid type additional item display region 245 may be a region displaying items adjacent to a left side based on a selected item or a region displaying items adjacent to a right side based on a selected item. The third grid type additional item display region 245 may be a region of displaying items adjacent to and at least one of above, below, to the left of, to the right of, and on a diagonal line with a selected item.

The first grid type additional item display region 243 is the same as the first grid type additional item display region 243 according to the fourth embodiment except for the size of a region. The first grid type additional item display region 243 may be removed from the display unit 140 according to a user request. If the first grid type additional item display region 243 is removed, the display unit 140 may output only the grid type selection item display region 242 and the third grid type additional item display region 245.

As described above, a search function of a plurality of items according to various embodiments of the present invention integrally combines selected items in an environment in which a plurality of items are displayed. The present invention may easily search additional items together with the ability to review and confirm the selected items during operation.

The grid type item searching procedure of the foregoing description has not illustrated an additional item is not displayed on a predetermined region or a selection item is not displayed on a display region, a scroller for supporting a scroll function may be output at one side of a screen. However, if a specific gesture event, for example, a flick event is generated, a scroll function of a region corresponding to the generated flick event direction may be performed.

The foregoing embodiment has separately illustrated forms of items outputted on a display screen in sequence, but a terminal 100 of the present invention may operate so that additional item display regions to be all displayed within a same screen.

That is, the foregoing additional item display region output, regions configured by at least one of items except for selection items, items arranged adjacent to the selection items, items which are not displayed except for a plurality of items including the selection item may complexly or individually constitute a predetermined region of the display unit 140.

FIG. 6 is a block diagram schematically illustrating a configuration of a terminal 100 according to an exemplary embodiment of the present invention.

Referring to FIG. 6, the terminal 100 of the present invention may include a communication unit 110, an input unit 120, an audio processor 130, a display unit 140, a memory 150, and a controller 160.

The terminal 100 of the present invention having a construction mentioned above may output a plurality of items to the display unit 140 in at least one of a list type or a grid type according to a user request. Also, the terminal 100 of the present invention may output only items selected from a plurality of items on a predetermined region of the display unit 140 according to the user request. During these processes, the terminal 100 of the present invention may support additional search of an item together with display of a selection item.

The communication unit 110 supports a communication function of the terminal 100. Accordingly, when the terminal 100 according to the present invention does not support a communication function, the communication unit 110 may be omitted from a configuration of the terminal 100. Meanwhile, the communication unit 110 may be provided in the form of a mobile communication module to support a communication function, particularly, a mobile communication function of the terminal 100. The communication unit 110 forms a communication channel with a mobile communication system to support signal transceiving for performing a mobile communication function of the terminal 100. For example, the communication unit 110 may form at least one of an audio service channel, an image service channel, and a data service channel with a mobile communication system, and support transceiving of a specific signal according to a corresponding service channel.

In particular, the communication unit 110 of the present invention may receive a plurality of items from the external source to output a plurality of items to the display unit 140. A plurality of items may be received in real time from a web server or another terminal based on a web access function or another terminal communication function. The communication unit 110 may receive a list corresponding to a plurality of items and grid type thumbnails.

The input unit generates various input signals necessary for an operation of the terminal 100. The input unit 120 may be configured by various input means such as a key board, a key pad, and a key button according to compatibility possibility of the terminal 100. When the display unit 140 is provided by a touch screen, the input unit 120 may be configured in the form of a touch map outputted on the touch screen. In particular, the input unit 120 of the present invention may generate an input signal for calling a search function of a plurality of items according to control of the user. For input requesting display of a selection item, the input unit 120 is configured by a key map or a key button so that the input signal may be outputted to the display unit 140.

The audio processor 130 may output various audio data set in an operation of the terminal 100, audio data according to playback of an audio file stored in the memory 150, and audio data received from the outside. The audio processor 130 may collect audio data. To achieve this, the audio processor 130 may include a speaker SPK and a microphone MIC. Particularly, the audio processor 130 may output various sound effect or guide sounds associated with display and selection of the items, and combined display according to control of the user or the controller 160. The output of effect sound or the guide sound of the audio processor 130 may be omitted according user setting or intention of a designer.

The display unit 140 provides various screen interfaces necessary for an operation of the terminal 100. For example, the display unit 140 supports an idle screen and a menu screen necessary for the operation of the terminal 100. Particularly, the display unit 140 of the present invention may output a plurality of items associated with a corresponding user function in one of a list type and a grid type according to activation of the specific user function. If a search function of a plurality of items requesting combining display of selection items is requested after predetermined items are selected from the items, the display unit 140 may output the selection items on predetermined regions according to a search function of a plurality of items described in FIGS. 1 to 5. To support additional search, the display unit 140 may display items which are not selected on a predetermined region according to a predetermined defined reference. If an input signal requesting restoring of a previous screen is generated, the display unit 140 may output a screen displaying a plurality of items having a selected state of the predetermined number of items. Meanwhile, the display unit 140 may cancel the selection of a particular item in a screen state that the selection item is displayed.

The display unit 140 may be provided in the form of a touch screen which is an overlapped form of the display panel 141 and the touch panel 143. Images and texts corresponding to the foregoing various screens may be output on the display panel 141, and at least one of the foregoing screen interfaces may be outputted. The touch panel 143 may set a touch valid region normally collecting a touch event and a touch invalid region disregarding a collected touch event and not collecting the touch event according to screen characteristics outputted on the display panel 141, and transfer a touch event generated from the touch valid region to the controller 160. In particular, when a plurality of items are outputted, the touch panel 143 may set a region of outputting a specific key map or key button for activating a search function of a plurality of items combining and displaying only selected items as the touch valid region. To return a previous screen in a screen state combining and displaying only the selected items, a region on which a selection item display map is outputted may be set as the touch valid region.

The memory 150 may store various basic operating systems necessary for an operation of the terminal 100, data corresponding to various user functions, a program, and an algorithm. In particular, the memory 150 may store a search program 153 for supporting a search function of a plurality of items and items 151.

The search program 153 may include an output routine which outputs a plurality of items on the display unit 140 according to the corresponding user function when a specific user function is activated. The output routine may include a routine of outputting a plurality of items in at least one of a list type and a grid type according to previous setting or a user request, a routine providing a check box supporting such that the user may select output items or cancel selection of the items, and an item support routine such as a key map or a key button for instructing combination of the selected items.

The search program 153 may include a routine for combining the selected items and providing the combined items to a predetermined region when an item such as the key map or the key button is activated and an additional search providing routine providing items which are not selected to a separate region. The additional search providing routine may include a routine of providing items to a predetermined region from items after a final item currently outputted on the display unit 140, a routine of providing items which are not selected among entire items outputted on the display unit 140 to the predetermined region, and a routine of providing items adjacent to a selected item among entire items outputted on the display unit 140 to the predetermined region.

The items 151 may be images, texts, audio files, widgets, and menus corresponding to a specific user function which are stored in the memory 150 of the terminal 100 or are received from the outside through the communication unit 110. The items 151 may be outputted in a list type or a grid type of a predetermined arrangement from the display unit 140 according a preset reference. To output the list type or the grid type, the memory 150 may store list information corresponding to the item 151 and grid information corresponding to respective items 151, for example, thumbnail items.

The memory 150 may further store selection item list information configured by items selected by the user or grid information of selected items. The memory 150 may include additional search item list information and additional search item grid information together with selection item list information. The additional search item list information and the additional search item grid information may be list information or grid information of items which are outputted on an additional item display region in each screen illustrated in FIGS. 1 to 5.

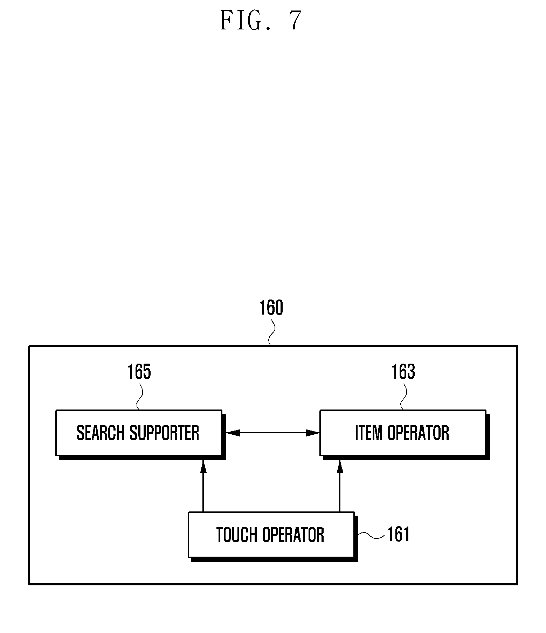

The controller 160 controls flow of various signals, information collection and output to support a search function of a plurality of items according to the embodiment of the present invention. The controller 160 may constituent elements as illustrated in FIG. 7.

FIG. 7 is a block diagram illustrating a configuration of a controller 160 shown in FIG. 6 in detail.

Referring to FIG. 7, the controller 160 of the present invention may include a touch operator 161, an item operator 163, and a search supporter 165.

The touch operator 161 sets a touch panel to process a touch signal of the terminal 100, determines collection, validity, or invalidity of the touch signal, and transfers a collected touch event to the search supporter 165 and the item operator 163. The touch operator 161 may collect a touch event in a check box so that a user may select at least one item in an output state of a plurality of items. If a touch event is collected from a selection item display map, the touch operator 161 may transfer the collected touch event to the search supporter 165. If a touch event is collected in a function selection region, the touch operator 161 may transfer the collected touch event to the item operator 163. To support page scrolling or scrolling of a predetermined region during search of an item, the touch operator 161 may collect a corresponding touch event and transfer the collected touch event to the search supporter 165.

When activation of a specific function with respect to selected items is requested, the item operator 163 activates a user function according to a corresponding item. That is, the item operator 163 determines whether activation of a specific function is requested from a function selection region in a state that there are selected items. If the activation of the specific function is requested, the item operator 163 may support such that a corresponding function is performed based on a selection item. For example, if a function for commonly writing specific tag information in the selected items is requested, the item operator 163 may support the display unit 140 to output a tag information writing screen. In this case, if the tag information is written, corresponding tag information may be commonly included in the selected items. If a function of sharing the selected items with another terminal is requested, the item operator 163 may form a communication channel with another terminal and transmit the selected items to another terminal. As described above, the item operator 163 may perform various functions such as playback, removal, sharing, setting change, common tag information writing, and integral transmission of the selected items according to a type of a function selected from the function selection region.

The search supporter 165 may combine selected items and provide the combined items to a predetermined region according to a user request during searching of a plurality of items. In this case, the search supporter 165 provides various additional item display regions given in a description of the screen interface together with display of selected items which allows the user to additionally select items. The search supporter 165 may support selection cancellation of selected items. The search supporter 165 supports outputs of a list type and a grid type with respect to a plurality of items. The search supporter 165 converts a list type output screen into a grid type output screen or convers the grid type output screen into the list type output screen.

As described above, a terminal 100 supporting a search function of a plurality of items according to an embodiment of the present invention may separately confirm only items selected by the user during the searching of a plurality of items to rapidly and conveniently determine which items are selected. The terminal 100 of the present invention may easily select other items in a state of confirming only selected items, and support returning to a previous screen.

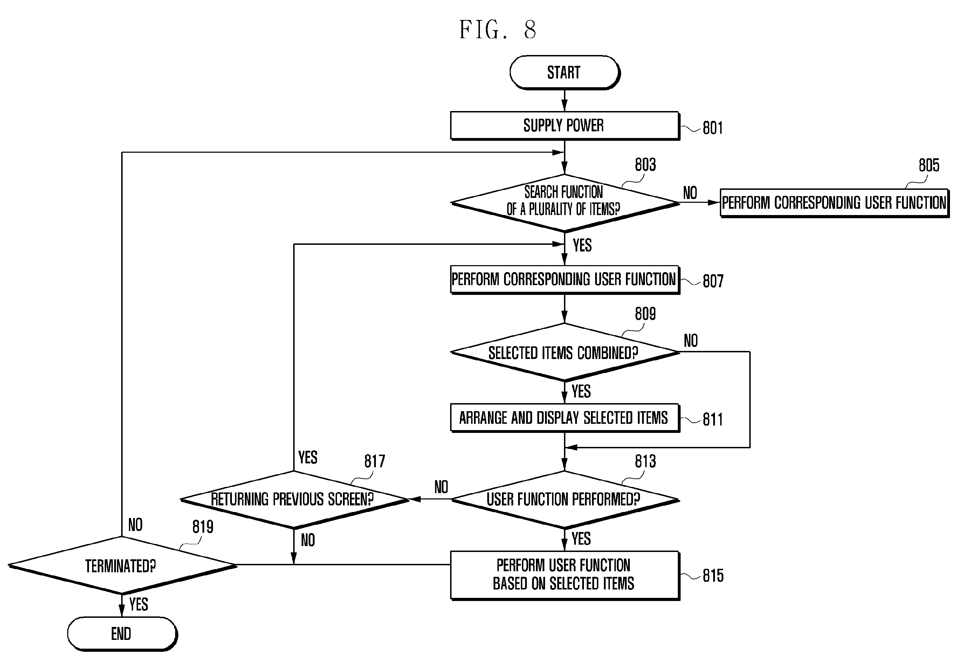

FIG. 8 is a flowchart illustrating a method of searching of a plurality of items according to an exemplary embodiment of the present invention.

Referring to FIG. 8, in the method of searching of a plurality of items according to an exemplary embodiment of the present invention, power is supplied to a terminal 100 (801). If the power is supplied from a power supply, a controller 160 of the terminal 100 may control such that corresponding power is converted into power necessary for respective constituent elements, and the converted power is distributed. In particular, the controller 160 may support power supply to the display unit 140 so that the display unit 140 may display a plurality of items associated with the corresponding user function in a predetermined type, for example, at least one of a list type and a grid type according to activation of a specific user function.

If an input signal is generated, the controller 160 may determine whether the input signal is an input signal for calling a search function of a plurality of items (803). When the input signal is not the input signal for calling a search function of a plurality of items, the controller 160 controls such that a user function according to a corresponding input signal is performed (805). For example, the controller 160 may perform a specific user function such as a broadcasting receiving function, a call function, a file playback function, a web access function, a file search function, and a near field communication function. When the input signal is the input signal for calling a search function of a plurality of items at step 803, the controller 160 may control the display unit 140 to output a plurality of items in at least one of a list type and a grid type according to previous setting or a user request (807). The search function is a function of requesting output of the items, and may be a function associated with a plurality of images, texts, audio files, and menu or widget icons. In the step, if an event for selecting specific items from the items is generated, the controller 160 may control such that a selection display of corresponding items may be supported. For example, the controller 160 may provide a check box by items and change setting the check box according to user selection.

Next, the controller 160 determines whether an input for combining selected items is generated (809). To do this, the controller 160 may support such that a key button or a key map for instructing combination of the selected items is outputted on the display unit 140. If an event for activating a corresponding key map is generated, the controller 160 may determine the event as an event for combining the selected items. If the event for combining the selected items is generated, the controller 160 may arrange the selected items according to a predetermined reference and control the display unit 140 to output the arranged selected items (811). In this case, the controller 160 may support the selected items to output a whole or predetermined region of a screen of the display unit 140. The controller 160 may support an additional item display region capable of supporting selection of an additional item to output on a predetermined region of a screen. If a specific item is selected from the additional item display region, the controller 160 controls such that the selected items are moved to a selection item display region. The controller 160 may control such that an item in which a cancelled selection from the selection item display region is moved to an additional item display region.

The controller 160 determines whether a specific user function is performed (813). That is, the controller 160 may determine whether an instructed item is selected from a function selection region so that a specific function is performed based on the selected items. If a specific function item is selected, the controller 160 may perform a user function based on selected items (815). For example, the controller 160 may perform various functions such as tag information integral writing based on selected items, transmission, removal, and movement of items.

When an input signal for instructing execution of a user function of a function selection region is not generated at step 813, the controller 160 may determine whether an input signal for returning a previous screen is generated (817). When the input signal for returning a previous screen is generated, the controller 160 returns to step 807 and performs the foregoing procedures. When the input signal for returning a previous screen is not generated, the controller 160 determines whether an input signal for terminating a function of the terminal 100 is generated (819). When the input signal for terminating a function of the terminal 100 is not generated, the controller 160 may return to step 803 and perform the foregoing procedures.

As mentioned above, the search support method for a plurality of items according to the embodiment of the present invention may more easily confirm only items selected during a search procedure of a plurality of items, and easily select an item.

Meanwhile, the foregoing embodiment has illustrated based on a state that an item is selected by the user after outputting a plurality of items, but the item may not be selected. In this case, the terminal 100 and a search function supporting method of the present invention combines items to output a guide sound, a text, or a pop-up window indicating that there are no items to be displayed.

The foregoing terminal 100 may further include various additional modules according to provision forms. That is, when the mobile terminal is a communication terminal, it may include constructions that are not mentioned such as a near distance communication module for near distance communication, an interface exchanging data in a wired communication scheme or a wireless communication scheme of the terminal 100, an Internet communication module communicating with an Internet to perform an Internet function, and a digital broadcasting module receiving and broadcasting digital broadcast. Since the structural elements can be variously changed according to convergence trend of a digital device, no elements can be listed. However, the terminal 100 may include structural elements equivalent to the foregoing structural elements. Further, the terminal of the present invention may be substituted by specific constructions in the foregoing arrangements according to the provided form or another structure. This can be easily understood to those skilled in the present art.

The terminal 100 according to the embodiment of the present invention may include various information communication devices and multi-media devices such as a Portable Multimedia Player (PMP), a digital broadcasting player, a Personal Digital Assistant (PDA), a music player (e.g., MP3 player), a portable game terminal, a Smart Phone, a Notebook computer, and a handheld PC as well as various mobile communication terminals operating according to communication protocols corresponding to various communication systems.

As mentioned above, in the searching support method for a plurality of items and a terminal supporting the same according the present invention, the present invention may easily confirm selected items in a state that a plurality of items are outputted, and easily perform additional item search in a confirmed state. It will be understood that, where in the description the use of check boxes is described for selecting an item and canceling selection of an item, an alternative selection mechanism may be used. For example, selection of an item could be indicated by changing the background color of the item.

The above-described methods according to the present invention can be implemented in hardware, firmware or as software or computer code that can be stored in a recording medium such as a CD ROM, an RAM, a floppy disk, a hard disk, or a magneto-optical disk or computer code downloaded over a network originally stored on a remote recording medium or a non-transitory machine readable medium and to be stored on a local recording medium, so that the methods described herein can be rendered in such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Although exemplary embodiments of the present invention have been described in detail hereinabove, it should be clearly understood that many variations and modifications of the basic inventive concepts herein taught which may appear to those skilled in the present art will still fall within the spirit and scope of the present invention, as defined in the appended claims.

## Claims

1. A method for selecting a plurality of items on a display screen, the method comprising:
displaying the plurality of items on the display screen; and
separately displaying at least one selected item selected from the plurality of items on a selection item display region in response to a request for displaying the at least one selected item.

2. The method of claim 1, further comprising:
enabling a user to select specific items from the plurality of items to obtain the at least one selected item;
wherein the separately displaying comprises displaying only the at least one selected item on the selection item display region.

3. The method of claim 1 or 2, further comprising providing at least one function item in a function selection region of the display screen, for performing a specific function on the selected items.

4. The method of claim 1, wherein separately displaying the at least one selected item comprises one of:
outputting a page including the at least one selected item which is converted on a screen on which the plurality of items are displayed; and
preparing a selection item display region by performing screen division or allocating a predetermined region on the screen on which the plurality of items are displayed, and outputting the at least one selected item on the selection item display region.

5. The method of claim 1 or 4, further comprising outputting at least one of the items which are not selected from the plurality of items on an additional item display region.

6. The method of claim 1 or 4, further comprising outputting a total number of the selected items.

7. The method of claim 5, wherein the outputting the at least one of the items which are not selected comprises at least one of:
outputting the plurality of items except for the selected items among the plurality of output items;
outputting items arranged adjacent to the selected items; and
outputting items which are not displayed except for a plurality of items including the selected items.

8. The method of claim 5 or 7, further comprising at least one of:
moving a newly selected item to the selection item display region when the newly selected item is selected from the additional item display region; and
moving an item in which selection is unselected to the additional item display region.

9. The method of claim 8, further comprising one of:
removing a previously displayed item from a corresponding region to display a newly selected item and outputting a scroller at one end of the selection item display region;
adjusting a size of total selected items suited to a size of the selection item display region to display the newly selected item; and
extending the selection item display region to display a newly selected item.

10. The method of claim 9, wherein the selection item display region updates and outputs a total number of the selected items according to the selection or cancellation of the selection of the item.

11. The method of claim 5, further comprising:
removing the additional item display region; and
extending the selection item display region according to the removal of the additional item display region.

12. The method of claim 1, further comprising arranging a check box adjacent to each item for selecting at least one item among the plurality of items or for cancelling the selection of the at least one item.

13. A terminal for selecting a plurality of items, comprising a display unit and a controller, the display unit configured to
display the plurality of items on the display unit; and
separately display at least one selected item selected from the plurality of items on a selection item display region in response to a request for displaying the at least one selected item.

14. The terminal of claim 13, wherein the display unit is configured to provide
a page including the at least one selected item and
a predetermined region on the display unit on which the plurality of items are displayed.

15. The terminal of claim 14, wherein the display unit is configured to display
an additional item display region outputting at least one of items which are not selected from the plurality of items.

16. The terminal of claim 14, wherein the display unit is configured to display a total number of the selected items.

17. The terminal of claim 15, wherein the additional item display region is configured to output at least one of:
items except for the selected items among the plurality of output items;
items arranged adjacent to the selected items; and
items which are not displayed.

18. The terminal of claim 17, wherein the controller is configured to
move a newly selected item from the additional item display region to the selection item display region; and
move an item in which selection is unselected from the selection item display region to the additional item display region.

19. The terminal of claim 18, wherein the display unit is configured to output one of:
a scroller at one end of the selection item display region;
a resized selection item display region to accommodate a newly selected item; and
an extended selection item display region to display the newly selected item.

20. The terminal of claim 19, comprising a selection item display item configured to update a total number of the selected items according to the new selection or selection cancellation of the item.

21. The terminal of claim 15, wherein the controller is configured to
remove the additional item display region according to a user request; and
extend and display the selection item display region according to the removal of the additional item display region.

22. The terminal of claim 13, wherein the display unit is configured to display a check box region arranged adjacent to each item for selecting at least one item among the plurality of items or for cancelling the selection of the at least one item.
